# EUROPEAN PATENT APPLICATION

(11) **EP 4 467 326 A1**
(43) Date of publication of application: **27.11.2024**
(21) Application number: 23175441.7
(22) Date of filing: 25.05.2023
(51) Int. Cl.: B29C 70/20, B29C 65/00, B29C 70/30, B29C 70/86, B29D 99/00, B32B 5/26, B64C 1/06, B64C 3/18, B29C 70/54, B29L 31/30, B64C 1/00

(54) **STRUCTURAL PART FOR AN AIRCRAFT AND METHOD FOR PROVIDING A STRUCTURAL PART**

(71) Applicant: Airbus Operations GmbH, 21129 Hamburg (DE)
(72) Inventor: Schulz, Alexander, 21129 Hamburg (DE)

(57) **Abstract**

The present invention relates to a structural part (100) for an aircraft (10). The structural part (100) is in the form of a laminate comprising a number of layers (110) of a fiber-reinforced composite, and comprising at least one ply (120) prefabricated of a fiber-reinforced composite and inserted between at least a portion of the number of layers (110). Further, the method relates to a method for providing such structural part (100).

## Description

### TECHNICAL FIELD OF THE INVENTION

The present invention relates to a structural part for an aircraft, spacecraft, or the like. Further, the present invention relates to a method for providing, e.g. manufacturing, a structural part for an aircraft. In addition, the present invention relates to an aircraft, spacecraft, or the like, comprising such structural part.

### TECHNICAL BACKGROUND

For structural parts for an aircraft, spacecraft, or the like, made of a fiber-reinforced composite an undisturbed fiber course is desirable. The fiber course of such structural part can be checked, for example, by examining a micrograph, a sectional image, or the like to see whether fibers of the composite and/or layers of a laminate have been disturbed, e.g. have displaced, during the curing process, which might undesirably change the corresponding characteristics of the composite and/or material, such as stiffness, strength, etc. Such an undesired fiber course disturbance may then be considered when dimensioning the structural part, e.g. by considering a corresponding knock-down factor, or the like.

### SUMMARY OF THE INVENTION

One of the objects of the invention is to provide improved solutions for providing a structural part for an aircraft, or the like, with desired characteristics of the fiber-reinforced composite. The object is solved by the subject-matter of the appended independent claims. Further embodiments are set out in the appended dependent claims.

According to a first aspect, there is provided a structural part for an aircraft, spacecraft, or the like. The structural part is in the form of a laminate comprising a number of layers of a fiber-reinforced composite. The structural part comprises at least one ply prefabricated of a fiber-reinforced composite and inserted between at least a portion of the number of layers.

In this configuration, the at least one ply may serve several functions at the same time.

For example, during a curing process of the laminate, the at least one ply may keep the number of layers, the fibers and/or a fiber course thereof, in particular in a thickness direction of the laminate, in a desired position and/or orientation with respect to a possible displacement, movement, etc. of the fibers. In other words, the at least one ply may form a kind of barrier, boundary, or the like for the fibers of the laminate and thus prevent, or at least mitigate, a disturbance of the course of the fibers. For example, the at least one ply may prevent a resin of the laminate and/or the fiber-reinforced composite from flowing by serving as a barrier or the like to the resin. It may have this effect, for example, in the thickness direction of the laminate, and in any other direction depending on its position and/or orientation within the laminate.

In addition, the at least one ply can also serve or contribute to load carrying. Accordingly, any additional weight of the at least one ply may be at least partially compensated by a corresponding weight saving in the laminate. The structural part is simple to manufacture, since the at least one ply already inserted prior to curing makes further sacrificial layers, which could alternatively be provided during curing, or a multi-stage curing process, so-called cobonding, obsolete. The inserted at least one ply can be easily detected, for example, by examining a micrograph or the like. It can also be detected that the at least one ply ensures or at least contributes to the fact that the fiber course of the fiber-reinforced composite of the laminate is as undisturbed as possible. The structural part, as well as the method for providing the same as described herein, makes it possible to provide the structural part with layers of the laminate being as close as possible to the geometry specified by the design and can therefore bear the full load.

For example, the fiber-reinforced composite of the laminate may be any composite having material characteristics that are suitable for aircraft design. This may be determined, for example, from material tables, material specifications, from experiments and/or tests, from literature, etc. The fiber-reinforced composite of the laminate may also be referred to as a first (fiber-reinforced) composite. The fiber-reinforced composite of the at least one ply may be any composite having material characteristics that are suitable for aircraft design. The fiber-reinforced composite of the at least one ply may also be referred to as a second (fiber-reinforced) composite. For example, it may have such material characteristics that it has sufficiently high strength, stiffness, or the like at a curing temperature of the fiber-reinforced composite of the laminate. This and the material characteristics may be determined, for example, from material tables, material specifications, from experiments and/or tests, from literature, etc. By way of example, the fiber-reinforced composite may comprise or may be based on fiberglass, carbon fiber, or the like. The fiber-reinforced composite of the laminate and the fiber-reinforced composite of the at least one ply may be the same composite or may differ from each other. Further, for instance, the at least one ply may be prefabricated and/or provided by using a suitable tool, such as a laminating device, a curing device, an autoclave or the like. In addition, the fiber-reinforced composite of the at least one ply and/or the at least one ply may have a higher hardness than the laminate.

The structural part may be used in an aircraft, spacecraft, or the like.

According to at least some embodiments, the at least one ply may be precured with respect to the number of layers. Thus, it may be provided already in an at least partially cured state and, in particular, may be provided in this at least partially cured state prior to curing of the fiber-reinforced composite of the laminate. Thus, it may prevent or at least reduce disturbance, such as an undesired movement, displacement, or the like, of the fiber course of the fiber-reinforced material of the laminate during curing.

In at least some embodiments, the at least one ply may have or may be provided with a plate shape. For example, the at least one ply may first be manufactured as a plate, also with a larger size, and then brought to a desired size, for example, by means of a cutting process. By way of example, it may be cut to size by means of water jet cutting, laser cutting, mechanical cutting, or the like. Thus, the at least one ply has a simple design and can be easily processed.

According to at least some embodiments, the at least one ply may be arranged in a planar manner with respect to a thickness direction of the laminate. For example, the at least one ply may extend two-dimensionally in a plane perpendicular to a thickness direction of the laminate. This may also be understood that the at least one ply may extend at least substantially parallel to the number of layers of the laminate. Thus, it may at least reduce or prevent undulation of the fibers or the like, particularly in the thickness direction of the laminate.

In at least some embodiments, the at least one ply may have adhesive properties and/or characteristics. This may be included or provided for during prefabricating the at least one ply. This may further improve the overall structure, e.g. also the strength, stiffness, etc. of the structural part. In addition, this may also facilitate lamination.

According to at least some embodiments, the at least one ply may comprise or may be in the form of a fabric. This may further improve the overall structure, e.g. also the strength, stiffness, etc. of the structural part. In addition, this may also facilitate lamination.

In at least some embodiments, the structural part may be configured to form one of the following: a stringer, a wing shell, a wing, a flap shell, a flap, a vertical stabilizer shell, a vertical stabilizer, or the like of the aircraft, spacecraft, etc. The part has an at least largely undisturbed fiber course of the laminate, since the at least one ply at least reduces or prevents a displacement of the fiber course during the curing of the laminate.

A second aspect provides a method for providing a structural part for an aircraft. The method may also be referred to as a manufacturing method for the structural part. The method comprises providing at least one ply that is prefabricated and/or precured of a fiber-reinforced composite. Further, the method comprises forming a laminate comprising a number of layers of a fiber-reinforced composite, wherein prior to or for curing the fiber-reinforced composite, the at least one ply is inserted between at least a portion of the number of layers.

The method may serve for providing the structural part of the first aspect. Accordingly, the method may be implemented according to any one of the embodiments of the first aspect. The method improves process reliability in manufacturing the structural part. For example, inserting the at least one ply can at least partially prevent fibers of the laminate from being displaced during curing.

Further, for example, the at least one ply may be prefabricated and/or provided by using a suitable tool, such as a laminating device, a curing device, an autoclave or the like. Then, for forming the laminate, the at least one ply may be inserted into a suitable tool, such as a laminating device, a curing device, an autoclave or the like, and inserted between at least a portion of the number of layers. There, it can act on the fibers of the fiber-reinforced composite for the laminate in such a way, particularly mechanically, that the fibers are held or kept in a desired position and/or orientation, particularly during curing the same. The may further comprise curing the laminate and/or the number of layers together with the inserted at least one ply.

According to at least some embodiments, the at least one ply may be provided plate-shaped. For example, the at least one ply may first be manufactured as a plate, also with a larger size, and then brought to a desired size, for example, by means of a cutting process. By way of example, it may be cut to size by means of water jet cutting, laser cutting, mechanical cutting, or the like. Thus, the at least one ply has a simple design and can be easily processed.

In at least some embodiments, the at least one ply may be inserted to be arranged in a planar manner with respect to a thickness direction of the laminate. For example, the at least one ply may extend two-dimensionally in a plane perpendicular to a thickness direction of the laminate. This may also be understood that the at least one ply may extend at least substantially parallel to the number of layers of the laminate. Thus, it may at least reduce or prevent undulation of the fibers or the like, particularly in the thickness direction of the laminate.

According to at least some embodiments, before inserting the at least one ply, it may be determined where in the laminate a disturbed fiber course may occur after curing. The at least one ply may be inserted there, i.e. at the respective location within the laminate based on the determination. For example, an appropriate positioning of the at least one ply may be determined based on calculation, modeling, based on experiments and/or tests, examination of micrographs, etc.

In at least some embodiments, multiple prefabricated and/or precured plies may be provided and inserted. Optionally, the multiple plies may be inserted with multiple different fiber courses of the respective fiber-reinforced composite. This allows further improving the fiber course of the structural part.

According to at least some embodiments, the at least one ply, when provided, may be cured only to a curing degree below a target curing degree of the structural part. The at least one ply may then complete curing together with the laminate after the insertion. For example, it may be up to e.g. 50% to 90% cured when provided and then only completely cured. In other words, the curing process of the at least one ply may be a two-stage process, with a first curing process before providing or during prefabrication and a second curing process after insertion into and curing of the laminate.

In at least some embodiments, the at least one ply may be inserted between at least one base layer and at least one stringer layer of the laminate. For example, the base layer may serve as a skin or the like on which one or more stringers are to be cured. The proposed method improves the fiber course and thus the part quality in e.g. stringers, thickness variations, etc.

According to a third aspect, there is provided an aircraft, spacecraft, or the like. The aircraft, spacecraft, etc. comprises at least one structural part according to the first aspect. Additionally or alternatively, aircraft, spacecraft, etc. comprises a structural part that is provided using the method according to the second aspect.

The above configurations and refinements may be combined with one another as desired where expedient. Further possible embodiments, refinements and implementations of the invention also encompass combinations, which are not explicitly mentioned, of features of the invention described above or below with regard to the exemplary embodiments. In particular, a person skilled in the art will also add individual aspects as improvements or additions to the respective basic form of the present invention.

### BRIEF SUMMARY OF THE DRAWINGS

The present invention is explained in more detail below with reference to the embodiments shown in the schematic figures:
- Fig. 1: illustrates a schematic micrograph of a structural part according to an embodiment or being manufactured according to an embodiment.
- Fig. 2: illustrates a part of a curing device, wherein at least one prefabricated and/or precured ply is inserted into a laminate to be cured, according to an embodiment.
- Fig. 3: illustrates an exemplary aircraft comprising a structural part according to an embodiment.
- Fig. 4: illustrates a schematic micrograph of a structural part with disturbed fiber courses according to prior art.

In the figures of the drawing, elements, features and components which are identical, functionally identical and of identical action are denoted in each case by the same reference designations unless stated otherwise.

### DESCRIPTION OF EXEMPLARY EMBODIMENTS

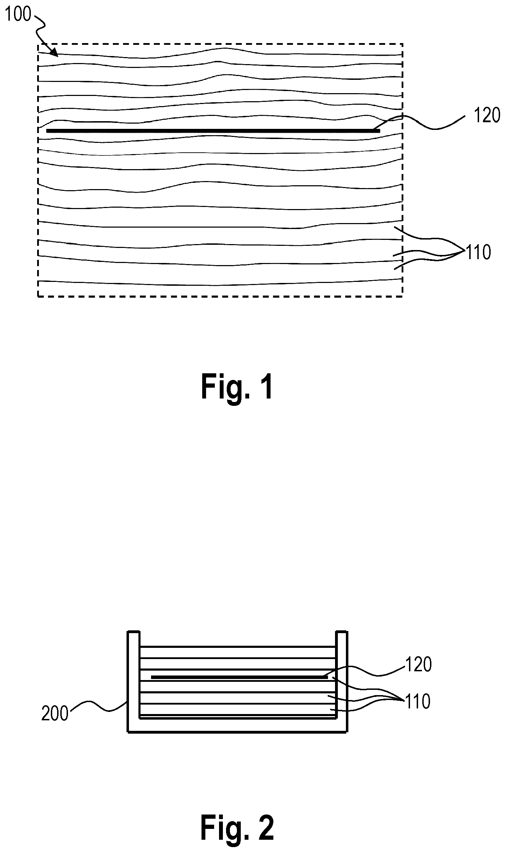

Fig. 1 illustrates a schematic micrograph of at least a section of a structural part 100 for an aircraft, spacecraft, or the like. Merely by way of example, the structural part 100 is configured to form a stringer, a wing shell, a wing, a flap shell, a flap, a vertical stabilizer shell, a vertical stabilizer, or the like, wherein this is not limited here.

The structural part 100 is in the form of or comprises a laminate that comprises or is formed by a number of layers 110 of a fiber-reinforced composite. Fig. 1 illustrates in principle the number of layers 110 and/or, at least exemplarily, the fiber course of the fiber-reinforced composite of the laminate and/or the number of layers 110. Further, the structural part 100 comprises at least one ply 120 that is prefabricated of a fiber-reinforced composite and inserted between at least a portion of the number of layers 110. That is, the at least one ply 120 is additionally inserted into the laminate. As exemplarily shown, the at least one ply 120 may be arranged in a planar manner with respect to a thickness direction of the laminate.

From Fig. 1, it can be seen that the fiber course of the laminate and/or the number of layer 110 is at least substantially undisturbed. This is achieved by the at least one ply 120 already being or having been placed into the laminate and/or into and/or between the number of layers 110 prior to or for a curing process of the laminate, i.e. curing of its fiber-reinforced composite and/or the number of layers 110. That is, during the curing process of the laminate, the at least one ply 120 has already been inserted, i.e. placed and/or arranged with in the laminate and/or the number of layers 110, and a disturbance of the fiber course that could be caused through the curing process, e.g. by displacement and/or movement of one or more of the number of layers 110, has at least been reduced or at least largely prevented.

In at least some embodiments, the at least one ply 110 may be precured with respect to the number of layers 110. Further, by way of example, the at least one ply 120 may have a plate shape, wherein other shapes are also conceivable depending on the design of the structural part 100. the at least one ply () has adhesive properties. In addition, the at least one ply may comprise or may be in the form of a fabric.

Fig. 2 illustrates roughly schematically a part of a curing device 200 and/or laminate device that can be used as a tool for manufacturing the structural part 100. The at least one ply 120 is effective in particular during the curing process of the laminate and/or its fiber-reinforced composite and/or its number of layers 110. As described above, the at least one ply 120 is additionally inserted into the laminate, as indicated in Fig. 2, even before the curing process of the of the laminate and/or its fiber-reinforced composite and/or its number of layers 110. Due to its, for example, hardness, strength, etc., the at least one ply 120 acts like a barrier, mold holder, or the like, and at least substantially prevents the number of layers 110 from shifting, moving, displacing, or the like.

With reference to Fig. 2, a method for providing, e.g., manufacturing, the structural part 100 will now be explained.

The method comprises providing the at least one ply 110 that is prefabricated and/or precured of a fiber-reinforced composite. Further, the method comprises forming the laminate comprising the number of layers 110 of a fiber-reinforced composite. Prior to or for curing the laminate and/or its fiber-reinforced composite and/or the number of layers 110, the at least one ply 120 is inserted between at least a portion of the number of layers 110. That is, during the curing process, the at least one ply 120 is already inserted into the (to-be-formed) laminate. For example, the at least one ply 120 may be precured with respect to the number of layers 110. The method may further comprise curing the laminate and/or the number of layers 110 together with the inserted at least one ply 120.

Further, for example, the at least one ply may be prefabricated and/or provided by using a suitable tool, such as a laminating device, the exemplary curing device 200 of Fig. 2, an autoclave, or the like. Then, for forming the laminate, the at least one ply may be inserted into the laminate and/or inserted between at least a portion of the number of layers. There, it can act on the fibers of the fiber-reinforced composite for the laminate in such a way, particularly mechanically, that the fibers are held in a desired position and/or orientation, i.e. a desired fiber course, particularly during curing the same.

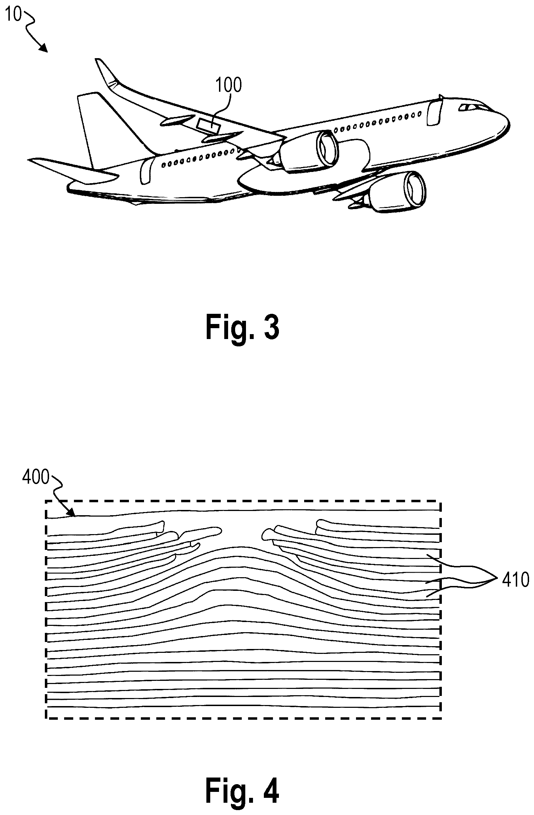

In addition, before inserting the at least one ply 120, it may be determined where in the laminate a disturbed fiber course may occur after curing. The at least one ply 120 may be inserted there, i.e. at the respective location within the laminate based on the determination. For example, an appropriate positioning of the at least one ply may be determined based on calculation, modeling, based on experiments and/or tests, examination of micrographs (cf. Fig. 4), etc.

Fig. 3 illustrates an exemplary aircraft 10 comprising the structural part 100 as described herein. Merely by way of example, the structural part 100 may form a stringer, a wing shell, a wing, a flap shell, a flap, a vertical stabilizer shell, a vertical stabilizer, or the like, of the aircraft 10, wherein this is not limited here.

Fig. 4 illustrates a schematic micrograph of a structural part 400 with disturbed fiber courses according to prior art. It is intended to further illustrate the function of the at least one ply 120 during curing.

Again, the structural part 400 is in the form of a laminate comprising a number of layers 410. In contrast to the structural part 100 described herein, the structural part 400 of Fig. 4 does not comprise something like the at least one ply 120 described herein. As a result, the number of layers 410 and/or the fibers of the fiber-reinforced composite of the laminate are displaced and the fiber courses are disturbed, e.g. undulated. Especially in the middle of the micrograph there are distinct bulges and undulation. For example, a resin of the laminate and/or fiber-reinforced composite may flow (with respect to Fig. 4) upward at this location because it is not held back. The structural part 100 described herein (as shown, e.g., in the schematic micrograph of Fig. 1) has an improved quality with respect thereto.

### LIST OF REFERENCE SIGNS

- 10: aircraft
- 100: structural part
- 110: layer(s)
- 120: ply
- 200: tool (e.g. curing device)

- 400: structural part (prior art)
- 410: layer(s) (prior art)

## Claims

1. A structural part (100) for an aircraft (10), the structural part (100) being in the form of a laminate comprising a number of layers (110) of a fiber-reinforced composite, and comprising at least one ply (120) prefabricated of a fiber-reinforced composite and inserted between at least a portion of the number of layers (110).

2. The structural part of claim 1, wherein the at least one ply (120) is precured with respect to the number of layers (110).

3. The structural part of claim 1 or 2, wherein the at least one ply (120) has a plate shape.

4. The structural part of any one of the preceding claims, wherein the at least one ply (120) is arranged in a planar manner with respect to a thickness direction of the laminate.

5. The structural part of any one of the preceding claims, wherein the at least one ply (120) has adhesive properties.

6. The structural part of any one of the preceding claims, wherein the at least one ply (120) comprises or is in the form of a fabric.

7. The structural part of any one of the preceding claims, wherein the structural part (100) is configured to form one of the following: a stringer, a wing shell, a wing, a flap shell, a flap, a vertical stabilizer shell, a vertical stabilizer.

8. A method for providing a structural part (100) for an aircraft (10), the method comprising:
providing at least one ply (120), prefabricated and/or precured of a fiber-reinforced composite; and
forming a laminate comprising a number of layers (110) of a fiber-reinforced composite, wherein prior to or for curing the fiber-reinforced composite, the at least one ply (120) is inserted between at least a portion of the number of layers (110).

9. The method of claim 8, wherein the at least one ply (120) is provided plate-shaped.

10. The method of claim 8 or 9, wherein the at least one ply (120) is inserted to be arranged in a planar manner with respect to a thickness direction of the laminate.

11. The method of any one of claims 8 to 10, wherein before inserting the at least one ply (120) it is determined where in the laminate a disturbed fiber course may occur after curing, and the at least one ply (120) is inserted there based on the determination.

12. The method of any one of claims 8 to 11, wherein multiple prefabricated and/or precured plies (120) are provided and inserted with multiple different fiber courses.

13. The method of any one of claims 8 to 12, wherein the at least one ply (120), when provided, is cured only to a curing degree below a target curing degree of the structural part (100), and the at least one ply (120) then completes curing together with the laminate after the insertion.

14. The method of any one of claims 8 to 13, further comprising curing the laminate and/or the number of layers (110) together with the inserted at least one ply (120).

15. An aircraft, comprising at least one structural part (100) according to any one of claims 1 to 7 and/or provided using the method according to any one of claims 8 to 14.
